(19) Europäisches Patentamt
European Patent Office
Office européen des brevets

(11) **EP 4 752 978 A1**

(12) **EUROPEAN PATENT APPLICATION**

(43) Date of publication:
**03.06.2026 Bulletin 2026/23**

(21) Application number: **25217642.5**

(22) Date of filing: **21.11.2025**

(51) International Patent Classification (IPC):
**H01M 4/58** $^{(2010.01)}$    **H01M 4/36** $^{(2006.01)}$

(52) Cooperative Patent Classification (CPC):
**H01M 4/5825;** H01M 4/364; H01M 2004/021;
Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.11.2024 JP 2024208875**

(71) Applicant: **Toyota Jidosha Kabushiki Kaisha Toyota-shi, Aichi-ken 471-8571 (JP)**

(72) Inventor: **MAHARA, Takanori Toyota-shi 471-8571 (JP)**

(74) Representative: **Kuhnen & Wacker Patent- und Rechtsanwaltsbüro PartG mbB Prinz-Ludwig-Straße 40 A 85354 Freising (DE)**

(54) **POSITIVE ELECTRODE ACTIVE MATERIAL, ELECTRODE, AND BATTERY**

(57)    The present disclosure relates to a positive electrode active material, an electrode (10), and a battery (100) that improve the rate characteristics of a battery (100). The positive electrode active material includes a primary particle. The primary particle contains an olivine-type phosphate compound. The primary particle has a degree of circularity of 0.60 or less.

## FIG. 5

| No. | Composition | Wet Grinding | | Secondary Particle | | | Evaluation |
|---|---|---|---|---|---|---|---|
| | | Bead Diameter $\phi$ | Grinding Time | First Primary Particle | Second Primary Particle | Area Ratio | Rate Characteristics |
| | | | | Spherical Particle Average Degree of Circularity | Non-Spherical Particle Average Degree of Circularity | $S_B/(S_A+S_B)$ | 1 C Capacity/0.1 C Capacity |
| | | [mm] | [min] | [−] | [−] | [−] | [%] |
| 1 | $LiMn_{0.8}Fe_{0.2}PO_4$ | 0.5 | 30 | 0.87 | 0.40 | 0.20 | 90 |
| 2 | $LiMn_{0.8}Fe_{0.2}PO_4$ | 0.5 | 60 | 0.91 | 0.60 | 0.14 | 90 |
| 3 | $LiMn_{0.8}Fe_{0.2}PO_4$ | 0.1 | 60 | 0.91 | − | 0 | 84 |

EP 4 752 978 A1

## Description

BACKGROUND OF THE INVENTION

1. Field of the Invention

The present disclosure relates to a positive electrode active material, an electrode, and a battery.

2. Description of Related Art

Japanese Unexamined Patent Application Publication No. 2021-009838 (JP 2021-009838 A) discloses a granule of manganese-rich lithium manganese iron phosphate particles and iron-rich lithium manganese iron phosphate particles.

SUMMARY OF THE INVENTION

The present disclosure provides a positive electrode active material improving the rate characteristics of a battery, an electrode, and a battery.

Hereinbelow, the technical configurations and functions and effects of the present disclosure will be described. It should be noted that action mechanisms include presumptions. The action mechanisms do not limit the technical scope of the present disclosure.

A positive electrode active material according to a first aspect of the present disclosure includes a primary particle containing an olivine-type phosphate compound and having a degree of circularity of 0.60 or less.

The primary particle of an olivine-type phosphate compound is synthesized to be close to a spherical shape. The reason for this is considered to be that when the primary particle is a spherical particle, fillability, that is, energy density is expected to improve. The spherical particle has a high degree of circularity. Hereinafter, the primary particle having a degree of circularity of 0.80 or more is also referred to as a "spherical particle".

The primary particle of the present disclosure has a degree of circularity of 0.60 or less. Hereinafter, the primary particle having a degree of circularity of 0.60 or less is also referred to as a "non-spherical particle". The non-spherical particle has a distorted shape. The non-spherical particle may have, for example, an angular portion. The non-spherical particle tends to be oriented in an electrode (positive electrode layer) in such a manner that the angular portion is along the thickness direction of the electrode. When an electrode includes the non-spherical particle, the penetration path of an electrolytic solution in the thickness direction of the electrode is expected to straighten. When the diffusibility of an electrolytic solution in the thickness direction of an electrode is improved, the rate characteristics are expected to improve.

The positive electrode active material according to the above aspect may further include a secondary particle, wherein: the secondary particle may include a first primary particle and a second primary particle; each of the first primary particle and the second primary particle may contain the olivine-type phosphate compound; the first primary particle may have a degree of circularity of 0.80 or more; and the second primary particle may have a degree of circularity of 0.60 or less.

The spherical particle and the non-spherical particle may form a secondary particle. When the spherical particle and the non-spherical particle are combined, for example, a balance between rate characteristics and fillability is expected to improve.

In the above aspect, the secondary particle may satisfy a relationship of $0.05 < S_B/(S_A + S_B) < 0.30$, the $S_A$ represents a total area of the first primary particles in a cross-section of the secondary particle and the $S_B$ represents a total area of the second primary particles in the cross-section of the secondary particle.

When the secondary particle includes the non-spherical particle at a specific ratio, the rate characteristics are expected to improve.

In the above aspect, the first primary particles may have an average degree of circularity of 0.87 to 0.91, the second primary particles may have an average degree of circularity of 0.40 to 0.60, and the secondary particle may satisfy a relationship of $14 \le S_B/(S_A + S_B) \le 0.20$.

When these conditions are satisfied, the rate characteristics are expected to improve.

In the above aspect, the olivine-type phosphate compound may contain at least one selected from the group consisting of lithium iron phosphate, lithium manganese phosphate, and lithium manganese iron phosphate.

An electrode according to a second aspect of the present disclosure includes a positive electrode layer, wherein the positive electrode layer may contain the positive electrode active material according to the above aspect.

The positive electrode layer may also be referred to as a "positive electrode active material layer", a "positive electrode mixture layer", or the like. The "electrode" may either be a "monopolar electrode (positive electrode)" or a "bipolar electrode" as long as a positive electrode layer is included.

A battery according to a third aspect of the present disclosure includes the electrode according to the above aspect.

The battery according to the above aspect may have a bipolar structure.

The bipolar structure can be formed by stacking bipolar electrodes. It is expected that the bipolar structure improves, for example, output characteristics. However, the bipolar structure may be required to have a thick positive electrode layer. In the case of a thick positive electrode layer, the diffusibility of an electrolytic solution in the thickness direction of the positive electrode layer may influence the rate characteristics. The positive electrode active material according to the above "1" is considered to be particularly suitable for the bipolar structure.

Hereinbelow, an embodiment of the present disclosure (which hereinafter may be abbreviated as "present embodiment") and an example of the present disclosure (which hereinafter may be abbreviated as "present example") will be described. It should be noted that the present embodiment and the present example do not limit the technical scope of the present disclosure. The present embodiment and the present example are illustrative in all aspects. The present embodiment and the present example are non-restrictive. The technical scope of the present disclosure includes all modifications within the meaning and the scope that are equivalent to the claims. For example, it is originally expected that certain configurations of the present embodiment may freely be combined.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

> FIG. 1 is a conceptual diagram of a primary particle according to the present embodiment;
> FIG. 2 is a conceptual diagram of a secondary particle according to the present embodiment;
> FIG. 3 is a schematic perspective view of a battery according to a present embodiment;
> FIG. 4 is a schematic cross-sectional view taken along the line IV- IV in FIG.3; and
> FIG. 5 is a table showing experimental results.

DETAILED DESCRIPTION OF EMBODIMENTS

Terms and Phrases

The terms "comprise", "contain", "have" and variations thereof are open-ended terms. When a configuration is described using such an open-ended term, an optional element may or may not be further included in addition to an essential element. The term "consist of" is a closed term. However, even when a configuration is described using such a closed term, impurities present under normal conditions and an additional element irrelevant to the target technique may be included. The term "essentially consist of" is a semi-closed term. When a configuration is described using such a semi-closed term, addition of an element that does not substantially affect the basic and novel characteristics of the target technique is allowed.

Terms such as "may" and "can" are used not in a mandatory sense, meaning "must" but in a permissive sense, meaning "it is possible".

A geometric term should not be interpreted in a strict sense. Examples of the geometric term include "parallel", "vertical", and "orthogonal". For example, direction, angle, or distance, may relatively be displaced to the extent that substantially the same or similar function can be obtained. The geometric term may include, for example, tolerances or errors in terms of design, operation, and production. A dimensional relationship in each of the drawings may not coincide with an actual dimensional relationship. The dimensional relationship in each of the drawings may have been changed to lead readers to understand. For example, length, width, and thickness may have been changed. Part of the configuration may have been omitted.

Unless otherwise specified, an element described in a "singular form" may be plural. For example, a particle may refer to a plurality of particles, assemblies of particles, or powder particles. It should be noted that a "plurality of particles" may also be referred to as a "group of particles".

Unless otherwise specified, a numerical range such as "m% to n%" includes an upper limit and a lower limit. That is, "m% to n%" indicates a numerical range of "equal to or more than m% and equal to or less than n%". Further, "equal to or more than m% and equal to or less than n%" includes "more than m% and less than n%". "Equal to or more than" and "equal to or less than" are expressed by inequality signs having an equal sign "$\leq$" and "$\geq$", respectively. "More than" and "less than" are expressed by inequality signs not having an equal sign "<" and ">", respectively. Any numerical value selected from the numerical range may be set as a new upper or lower limit. For example, a new numerical range may be set by freely combining a numerical value in the numerical range and a numerical value described in a different part herein or shown in tables or the drawings.

All the numerical values are interpreted as being modified by the term "about". The term "about" may mean, for example, $\pm 5\%$, $\pm 3\%$, or $\pm 1\%$. All the numerical values may be approximate values that may vary depending on how the target technique is used. All the numerical values may be expressed in significant figures. Unless otherwise specified, a measured value may be an average of two or more measurements. The number of measurements may be 3 or more, 5 or more, or 10 or more. It is generally expected that the larger the number of measurements, the higher the reliability of the average. A measured value may be rounded off based on the number of significant figures. A measured value may include, for example, an error due to the detection limit of a measurement device.

Devices, software, etc. used for measurement of various values are merely examples. Products similar to the devices etc. exemplified herein may be used. When a similar product is used, measurement conditions may be adjusted depending on a device to be used.

A "primary particle" refers to a particle apparently having no grain boundary in an SEM (Scanning Electron Microscope) image of a powder. The magnification of the SEM image may be, for example, 10000 times to 30000 times.

The shape of the primary particle and the shape of a secondary particle are evaluated by the following procedure. For example, a dispersion liquid is formed by dispersing 1 g of a positive electrode active material (powder) in 10 g of an epoxy resin (product name "EPOTEXJP", manufactured by New EM Co., Ltd.). The dispersion liquid is stirred and mixed for 1 minute by a mixer (product name "Awatori Rentaro", manufactured by THINKY CORPORATION). A stirring speed may be, for example, about 2000 rpm. The dispersion liquid is subjected to vacuum defoaming. After the vacuum defoaming, the epoxy resin is cured in a silicon mold to obtain a plate-shaped cured product. The plate-shaped cured product is subjected to cross-section processing by CROSS SECTION POLISHER (R) to prepare a cross-section sample having a smooth cross-section. The smooth cross-section is subjected to SEM observation to obtain an SEM cross-section image.

In the SEM cross-section image, 50 primary particles whose whole circumference can be observed are selected. The degree of circularity of each of the 50 primary particles is measured. The "degree of circularity" is determined by the following calculation formula.

$$\psi = 4\pi S/L^2$$

$\psi$: Degree of circularity
$\pi$: Circle ratio
S: Sectional area of particle (Area of region surrounded by outline of particle)
L: Perimeter of particle (Length of outline of particle)

A particle having a degree of circularity of 0.8 or more is classified as a spherical particle (first primary particle). The average of degrees of circularity of an assembly of spherical particles is defined as an "average degree of circularity of spherical particles". A particle having a degree of circularity of 0.6 or less is classified as a non-spherical particle (second primary particle). The average of degrees of circularity of an assembly of non-spherical particles is defined as an "average degree of circularity of non-spherical particles".

In the SEM cross-section image of the secondary particle, the total area "$S_A$" of spherical particles and the total area "$S_B$" of non-spherical particles are measured. An area ratio "$S_B/(S_A + S_B)$" is determined by dividing "$S_B$" by the sum of "$S_A$" and "$S_B$".

It should be noted that measurement of various dimensions and shape analysis using the SEM cross-section image may be performed using, for example, image analysis software "Image J".

The "maximum Feret diameter" refers to the length of long side of minimum bounding rectangle (MBR) of outline of a particle in the SEM cross-section image.

The chemical composition of a compound can be measured by ICP-AES (Inductively Coupled Plasma Atomic Emission Spectroscopy). A sample solution is prepared by dissolving 0.1 g of a sample (e.g., a positive electrode active material) in a mixed acid (10 mL) of hydrochloric acid and sulfuric acid. The sample solution is diluted to an appropriate concentration in a measuring flask. After dilution, chemical composition analysis is performed by an ICP-AES device. For example, a device sold under the trade name of "PS3520 UVDDII (manufactured by Hitachi High-Tech Science Corporation)" may be used.

A stoichiometric composition formula represents a typical example of a compound. A compound may have a non-stoichiometric composition. For example, "$Al_2O_3$" is not limited to a compound having an amount-of-substance ratio (mole ratio) of "$Al/O = 2/3$". Unless otherwise specified, "$Al_2O_3$" represents a compound containing Al and O in any amount-of-substance ratio. For example, the compound may be doped with a trace element. Some of Al and O may be replaced with another element.

A "derivative" refers to a compound obtained by modifying part of its original compound by at least one selected from the group consisting of functional group introduction, atomic substitution, oxidation, reduction, and another chemical reaction. The number of modification sites may be one or more. A "substituent" may include, for example, at least one selected from the group consisting of an alkyl group, an alkenyl group, an alkynyl group, a cycloalkyl group, an unsaturated cycloalkyl group, an aromatic group, a heterocyclic group, a halogen atom (e.g., F, Cl, Br, or I), an OH group, an SH group, a CN group, an SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthiol group, a sulfonyl group, a sulfinyl group, a ureido group, an amide phosphate group, a sulfo group, a carboxyl group, a hydroxamic group, a sulfino group, a hydrazino group, an imino group, and a silyl group. These substituents may further be substituted. When there are two or more substituents, these substituents may be the same or different from each other. A plurality of substituents may be bonded to each other to form a ring.

"D50" refers to a particle diameter corresponding to 50% of a cumulative amount in a volume-based particle size distribution (cumulative size distribution). The volume-based particle size distribution is measured by a laser diffraction particle size distribution measurement device.

Positive Electrode Active Material

A positive electrode active material may be in, for example, a powder form. The D50 of the positive electrode active material may be, for example, 5 μm or more, 10 μm or more, 15 μm or more, or 20 μm or more. The D50 of the positive electrode active material may be, for example, 30 μm or less, 25 μm or less, 20 μm or less, 15 μm or less, or 10 μm or less.

Primary Particle

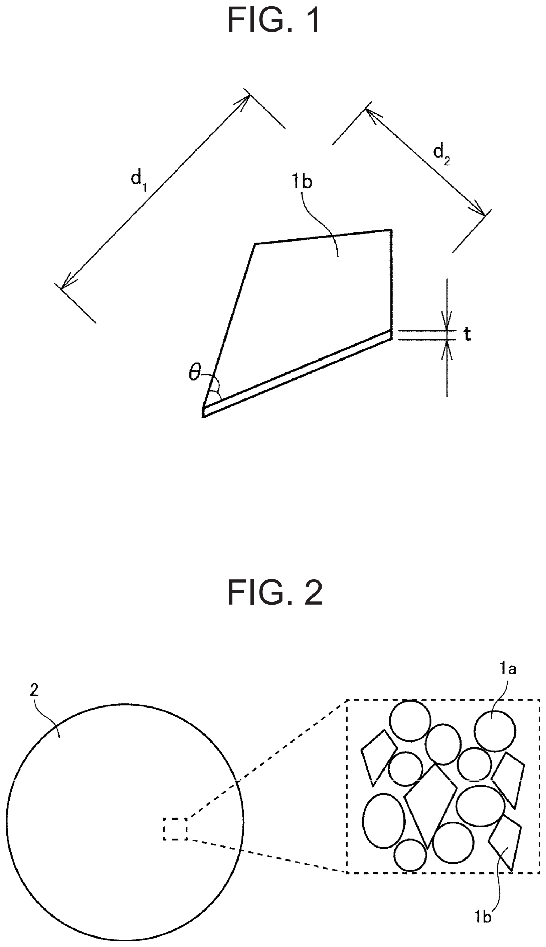

FIG. 1 is a conceptual diagram of a primary particle according to the present embodiment. The positive electrode active material includes a primary particle (non-spherical particle 1b). The non-spherical particle 1b has a degree of circularity of 0.60 or less. When a distorted primary particle is mixed into an electrode, rate characteristics are expected to improve.

The average degree of circularity of the non-spherical particles 1b may be, for example, 0.55 or less, 0.50 or less, 0.45 or less, 0.40 or less, or 0.35 or less. The average degree of circularity of the non-spherical particles 1b may be 0.30 or more, 0.35 or more, 0.40 or more, 0.45 or more, 0.50 or more, or 0.55 or more. The average degree of circularity of the non-spherical particles 1b may be, for example, 0.40 to 0.60.

The non-spherical particle 1b may be, for example, an angular particle. The "angular particle" refers to a particle having a sharpest angle "θ" of 60° or less. The "sharpest angle" refers to a minimum sharp angle out of interior angles formed by the outline of a particle in the SEM cross-section image. The sharpest angle may be, for example, 55° or less, 50° or less, 45° or less, 40° or less, 35° or less, 30° or less, 25° or less, 20° or less, or 15° or less. The sharpest angle may be, for example, 10° or more, 15° or more, 20° or more, 25° or more, 30° or more, 35° or more, 40° or more, 45° or more, 50° or more, or 55° or more.

The non-spherical particle 1b may be, for example, a scale-like particle. The "scale-like particle" is a plate-shaped and angular particle. The "plate-shaped particle" has a planar direction (plate surface direction) and a thickness direction. A "first aspect ratio" refers to the ratio of the maximum Feret diameter "di" in the plate surface direction to the thickness "t" of the plate-shaped particle. The first aspect ratio "di/t" may be, for example, 2 or more, 3 or more, 4 or more, 5 or more, 6 or more, 7 or more, 8 or more, or 9 or more. The first aspect ratio "di/t" may be, for example, 10 or less, 9 or less, 8 or less, 7 or less, 6 or less, 5 or less, 4 or less, or 3 or less.

The plate surface of the plate-shaped particle may have any shape. The "plate surface" refers to a surface apparently having a maximum area. The plate surface may be, for example, polygonal, hexagonal, pentagonal, tetragonal, parallelogram-shaped, or rectangular. A "second aspect ratio" refers to the ratio of long side "di" to short side "$d_2$" of MBR of the plate surface. The second aspect ratio "$d_1/d_2$" may be, for example, 1.2 or more, 1.5 or more, 1.8 or more, 2.1 or more, 2.4 or more, 2.7 or more, 3.0 or more, 4.0 or more, or 5.0 or more. The second aspect ratio "$d_1/d_2$" may be, for example, 10.0 or less, 5.0 or less, 4.0 or less, 3.0 or less, or 2.0 or less.

Secondary Particle

FIG. 2 is a conceptual diagram of a secondary particle according to the present embodiment. The non-spherical particles 1b may be present independently from each other without aggregating. The non-spherical particles 1b may form aggregates. That is, the positive electrode active material may include a secondary particle 2. The secondary particle 2 may be composed of the non-spherical particles 1b. The secondary particle 2 may have any shape as long as it includes the non-spherical particle 1b. The secondary particle 2 may be, for example, spherical, rod-like, angular, or massive. The degree of circularity of the secondary particle may be, for example, 0.50 or more, 0.60 or more, 0.70 or more, 0.80 or more, or 0.90 or more. The degree of circularity of the secondary particle may be, for example, 0.90 or less, 0.80 or less, 0.70 or less, or 0.60 or less.

The secondary particle 2 may further include a spherical particle 1a in addition to the non-spherical particle 1b. That is, the secondary particle 2 may include a first primary particle (spherical particle 1a) and a second primary particle (non-spherical particle 1b). The spherical particle 1a has a degree of circularity of 0.80 or more. The average degree of circularity of the spherical particles 1a may be, for example, 0.85 or more, 0.87 or more, 0.89 or more, 0.90 or more, 0.91 or more, or 0.93 or more. The average degree of circularity of the spherical particles 1a may be, for example, 0.95 or less, 0.93 or less, 0.91 or less, 0.89 or less, 0.87 or less, or 0.85 or less. The average degree of circularity of the spherical particles 1a may be, for example, 0.87 to 0.91.

The secondary particle 2 may include the non-spherical particle 1b at a specific ratio. When the secondary particle 2 satisfies a relationship of, for example, "$0.05 < S_B/(S_A + S_B) < 0.30$, rate characteristics are expected to improve. The area ratio "$S_B/(S_A + S_B)$" may be, for example, 0.07 or more, 0.09 or more, 0.11 or more, 0.13 or more, 0.14 or more, 0.15 or more, 0.17 or more, 0.19 or more, 0.20 or more, 0.21 or more, 0.23 or more, 0.25 or more, 0.27 or more, or 0.29 or more. The area ratio "$S_B/(S_A + S_B)$" may be, for example, 0.29 or less, 0.27 or less, 0.25 or less, 0.23 or less, 0.21 or less, 0.20 or less, 0.19 or less, 0.17 or less, 0.15 or less, 0.14 or less, 0.13 or less, 0.11 or less, 0.09 or less, or 0.07 or less. The secondary particle 2 may satisfy a relationship of, for example, "$0.14 \leq S_B/(S_A + S_B) \leq 0.20$.

The maximum Feret diameter of the primary particle may be, for example, 20 nm to 300 nm. The maximum Feret diameter of the primary particle may be, for example, 25 nm or more, 50 nm or more, 75 nm or more, 100 nm or more, 150 nm or more, 200 nm or more, or 250 nm or more. The maximum Feret diameter of the primary particle may be, for example, 250 nm or less, 200 nm or less, 150 nm or less, 100 nm or less, 75 nm or less, or 50 nm or less. The maximum Feret diameter of the primary particle refers to the arithmetic average of 30 primary particles. The maximum Feret diameter of the spherical particle 1a and the maximum Feret diameter of the non-spherical particle 1b may be the same or different from each other.

Carbon may cover the surface of the primary particle. That is, a carbon layer may be formed on the surface of the primary particle. The carbon may cover part of the surface of the primary particle or may cover the entire surface of the primary particle. The carbon may be derived from, for example, sugar. The amount of the carbon attached may be, for example, 0.1% or more, 0.5% or more, 1% or more, 2% or more, 3% or more, 4% or more, 5% or more, or 10% or more in terms of mass fraction relative to the secondary particle 2. The amount of the carbon attached may be, for example, 20% or less, 15% or less, 10% or less, 5% or less, 4% or less, or 3% or less in terms of mass fraction relative to the secondary particle 2.

The maximum Feret diameter of the secondary particle 2 may be, for example, 1 $\mu$m or more, 3 $\mu$m or more, 5 $\mu$m or more, 10 $\mu$m or more, or 15 $\mu$m or more. The maximum Feret diameter of the secondary particle 2 may be, for example, 20 $\mu$m or less, 15 $\mu$m or less, 10 $\mu$m or less, 5 $\mu$m or less, or 3 $\mu$m or less.

Composition

The primary particle contains an olivine-type phosphate compound. That is, the positive electrode active material contains an olivine-type phosphate compound. Hereinafter, the olivine-type phosphate compound may be abbreviated as an "olivine". The olivine has a crystal structure belonging to a space group Pnma. A space group to which the crystal structure belongs can be determined by an XRD (X-Ray Diffraction) pattern.

The olivine may further include, for example, a glass phase, a crystallized glass phase in addition to a crystal phase. For example, the non-spherical particles 1b may be formed by appropriately grinding a material containing glass. For example, a crystallized glass phase or the like can be formed by vitrifying raw materials once and then crystallizing the resultant during synthesis.

The olivine may contain, for example, at least one selected from the group consisting of LFP, LMP, and LMFP. The olivine may contain, for example, at least one selected from the group consisting of LMP and LMFP. LMP and LMFP tend to have lower rate characteristics as compared to LFP. The present embodiment is considered to be particularly suitable for LMP and LMFP.

The olivine may have a composition represented by, for example, a general formula of "$Li_aMn_{1-x}Fe_xPO_4$". In the general formula, an Li compositional ratio "a" may be, for example, 0.5 or more, 0.6 or more, 0.7 or more, 0.8 or more, 0.9 or more, 1.0 or more, 1.1 or more, 1.2 or more, 1.3 or more, or 1.4 or more. In the general formula, the Li compositional ratio "a" may be, for example, 2.0 or less, 1.5 or less, 1.4 or less, 1.3 or less, 1.2 or less, 1.1 or less, 1.0 or less, 0.9 or less, 0.8 or less, 0.7 or less, or 0.6 or less. In the general formula, a relationship of, for example, "$0.5 \leq a \leq 1.5$" may be satisfied. In the general formula, an Fe compositional ratio "x" may be, for example, 0 or more, 0.1 or more, 0.2 or more, 0.3 or more, 0.4 or more, 0.5 or more, 0.6 or more, 0.7 or more, 0.8 or more, or 0.9 or more. In the general formula, the Fe compositional ratio "x" may be, for example, 1.0 or less, 0.9 or less, 0.8 or less, 0.7 or less, 0.6 or less, 0.5 or less, 0.4 or less, 0.3 or less, 0.2 or less, or 0.1 or less. In the general formula, a relationship of, for example, "$0.2 \leq x \leq 0.5$" may be satisfied.

A dopant may be added to the olivine. The dopant refers to an element other than lithium (Li), manganese (Mn), iron (Fe), phosphorus (P), and oxygen (O). The amount of the dopant added (amount fraction relative to amount-of-substance of Li) may be, for example, 0.01 to 0.1. The dopant may contain, for example, at least one selected from the group consisting of boron (B), nitrogen (N), halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium(Tm), ytterbium (Yb), lutetium (Lu), and actinide.

The positive electrode active material may further contain another component as long as it contains an olivine. The mixing ratio (mass ratio) between the olivine and the another component may be, for example, "olivine/another component = 9/1 to 1/9", "olivine/another component = 8/2 to 2/8", "olivine/another component = 7/3 to 3/7", or "olivine/another component = 6/4 to 4/6". The positive electrode active material may be, for example, a mixture of a powder of an olivine and a powder of another component. The another component may contain, for example, at least one selected from the group consisting of Li[NiCoMn]$O_2$ (layered structure), Li[NiCoAl]$O_2$ (layered structure), LiMnO$_2$ (rock salt structure), and Li[NiMn]$_2O_4$ (spinel structure). It should be noted that [NiCoMn] or the like indicates that the sum of the compositional ratios of elements in parentheses is 1. The compositional ratios of the individual elements in parentheses are not limited as long as the sum of them is 1.

Liquid-Based Battery

In some present embodiments, a battery may be a liquid-based battery. The "liquid-based battery" refers to a battery including an electrolytic solution. For example, a polymer battery includes an electrolytic solution and therefore belongs to liquid-based batteries. In some present embodiments, the battery has a monopolar structure. In the monopolar structure, a power-generating element may be of a wound type or a lamination type. In some present embodiments, the battery has a bipolar structure. As an example, a battery having a bipolar structure (bipolar battery) will be described.

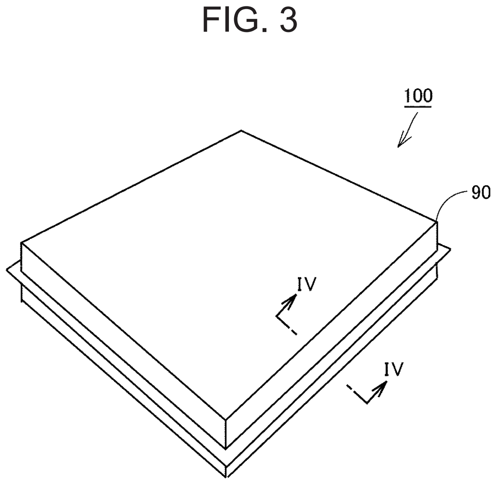

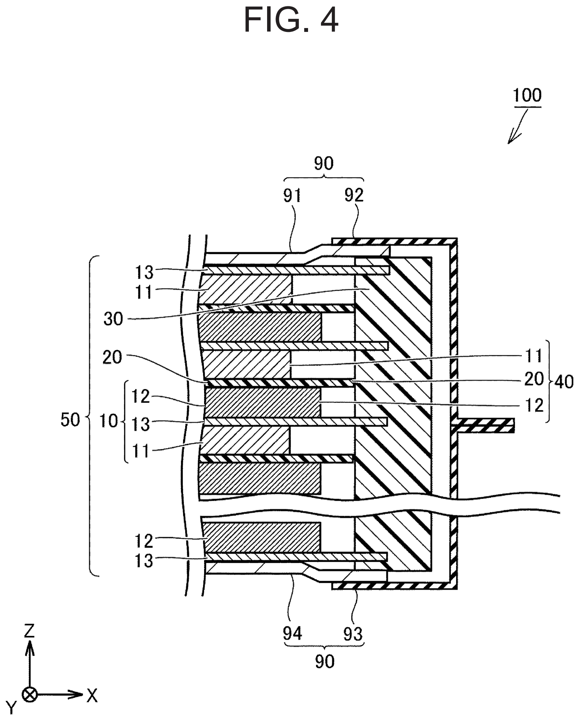

FIG. 3 is a schematic perspective view of a battery according to the present embodiment. FIG. 4 is a schematic sectional view taken along the line IV-IV shown in FIG.3. Hereinafter, a "perpendicular direction" refers to a normal direction relative to the surface of a sheet-shaped member (e.g., a foil or an electrode). An "in-plane direction" refers to any direction orthogonal to the perpendicular direction. In the diagram of the present embodiment, a Z-axis direction corresponds to the perpendicular direction. An X-axis direction and a Y-axis direction are examples of the in-plane direction.

A battery 100 includes an exterior body 90 and a power-generating element 50. The exterior body 90 houses the power-generating element 50. The exterior body 90 may include, for example, a first current collector plate 91, a first laminate film 92, a second laminate film 93, and a second current collector plate 94. The first laminate film 92 and the second laminate film 93 are joined together around their ends in the in-plane direction. At the joint between the first laminate film 92 and the second laminate film 93, a sealing material (not shown) may be interposed between the first laminate film 92 and the second laminate film 93.

The first current collector plate 91 and the second current collector plate 94 are joined to the power-generating element 50 at the ends of the power-generating element 50 in a lamination direction (Z-axis direction). The first laminate film 92 is joined to the first current collector plate 91. The second laminate film 93 is joined to the second current collector plate 94. At the joint between the current collector plate and the laminate film, a sealing material (not shown) may be interposed between the current collector plate and the laminate film.

The power-generating element 50 includes a plurality of bipolar electrodes 10. The bipolar electrodes 10 are laminated in the perpendicular direction (Z-axis direction). Each of the bipolar electrodes 10 includes a positive electrode layer 11, a current collector foil 13, and a negative electrode layer 12 in this order in the perpendicular direction. In the in-plane direction, (e.g., in the X-axis direction), the current collector foil 13 extends outward beyond the positive electrode layer 11 and the negative electrode layer 12. For example, the current collector foil 13 may extend outward beyond the positive electrode layer 11 and the negative electrode layer 12 around entire periphery in the in-plane direction.

The current collector foil 13 is conductive. The current collector foil 13 may include, for example, a metallic foil or an electrically-conductive resin layer. For example, the current collector foil 13 may be formed by bonding together an Al foil and a Cu foil. A carbon material may be applied onto the surface of the current collector foil 13. The carbon material may contain, for example, carbon black.

The power-generating element 50 includes a sealing material 30. The sealing material 30 is joined to the current collector foils 13 at the end of the current collector foils 13 in the in-plane direction. For example, the sealing material 30 may be thermally welded to the current collector foils 13. For example, the sealing material 30 may be disposed along the entire periphery in the in-plane direction. The sealing material may contain, for example, a resin material. The sealing material 30 seals spaces between the current collector foils 13 adjacent to each other in the perpendicular direction. Cells 40 are formed by sealing the spaces between the current collector foils 13 with the sealing material 30. The cells 40 are minimum units of the power-generating element 50. The battery 100 includes the cells 40 and therefore may also be referred to as a "bipolar module". Each of the cells 40 is hermetically sealed. The cells 40 are isolated from each other. Each of the cells 40 includes the positive electrode layer 11, a separator 20, the negative electrode layer 12, and an electrolytic solution.

Positive Electrode Layer

The positive electrode layer 11 is attached to one side of the current collector foil 13. The thickness of the positive electrode layer 11 may be, for example, 50 $\mu$m to 1000 $\mu$m. The thickness of the positive electrode layer 11 may be, for example, 100 $\mu$m or more, 200 $\mu$m or more, 300 $\mu$m or more, 400 $\mu$m or more, or 500 $\mu$m or more. The thickness of the positive electrode layer 11 may be, for example, 750 $\mu$m or less, 500 $\mu$m or less, or 400 $\mu$m or less. For example, the positive electrode layer 11 may have a groove. The positive electrode layer 11 may be formed, for example, in stripes. The positive electrode layer 11 contains a positive electrode active material. That is, the electrode includes a positive electrode active material. The details of the positive electrode active material are as described above.

The positive electrode layer 11 may further contain, for example, an electrically-conductive material and a binder in addition to the positive electrode active material. The amount of the electrically-conductive material to be added may be, for example, 0.1 to 10 parts by mass per 100 parts by mass of the positive electrode active material. The electrically-conductive material may contain any component. For example, the electrically-conductive material may contain at least one selected from the group consisting of graphite, acetylene black (AB), ketjen black (registered trademark), vapor-grown carbon fibers (VGCFs), carbon nanotubes (CNTs), and graphene flakes (GFs).

The amount of the binder to be added may be, for example, 0.1 to 10 parts by mass per 100 parts by mass of the positive electrode active material. The binder may contain any component. The binder may contain, for example, at least one selected from the group consisting of polyvinylidene fluoride (PVdF), a vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinyl pyrrolidone (PVP), polyoxyethylene alkyl ether, and derivatives thereof.

The positive electrode layer 11 may further contain, for example, an inorganic filler, an organic filler, a solid electrolyte, a surface modifier, a dispersant, a lubricant, a flame retardant, a protective agent, a flux, a coupling agent, or an adsorbent. The positive electrode layer may contain, for example, polyoxyethylene allyl phenyl ether phosphate, zeolite, a silane coupling agent, $MoS_2$, or $WO_3$.

Negative Electrode Layer

The negative electrode layer 12 is attached to one side of the current collector foil 13. The negative electrode layer 12 is disposed on the back of the positive electrode layer 11. The negative electrode layer 12 may have a larger area than the positive electrode layer 11. The negative electrode layer 12 contains a negative electrode active material.

The negative electrode active material may be, for example, in a particulate or sheet form. The D50 of the negative electrode active material may be, for example, 1 $\mu$m or more, 5 $\mu$m or more, or 10 $\mu$m or more. The D50 of the negative electrode active material may be, for example, 30 $\mu$m or less, 20 $\mu$m or less, 15 $\mu$m or less, or 10 $\mu$m or less.

The negative electrode active material may contain any component. The negative electrode active material may contain, for example, at least one selected from the group consisting of a carbon-based active material, an alloy-based active material, an Si-C-composite material, Li metal, an Li-based alloy, and lithium titanate. In some present embodiments, the battery may be an Li metal negative electrode battery.

The carbon-based active material may contain, for example, at least one selected from the group consisting of graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1", "natural graphite/artificial graphite = 2/8 to 8/2", or "natural graphite/artificial graphite = 3/7 to 7/3".

The surface of the graphite may be covered with, for example, amorphous carbon. The surface of the graphite may be covered with, for example, another type of material. The another type of material may contain, for example, at least one selected from the group consisting of P, W, Al, and O. The another type of material may contain, for example, at least one selected from the group consisting of $Al(OH)_3$, AlOOH, $Al_2O_3$, $WO_3$, $Li_2CO_3$, $LiHCO_3$, and $Li_3PO_4$.

The alloy-based active material may contain, for example, at least one selected from the group consisting of Si, Li silicate, SiO, an Si-based alloy, tin (Sn), SnO, and an Sn-based alloy.

The SiO may have a composition represented by, for example, a general formula of "$SiO_x$". In the general formula, a relationship of, for example, "$0 < x < 2$", "$0.5 \leq x \leq 1.5$", or "$0.8 \leq x \leq 1.2$" may be satisfied.

The "Si-C composite material" refers to a composite material of a carbon-based active material (e.g., graphite) and an alloy-based active material (e.g., Si). For example, Si microparticles may be dispersed in carbon particles. For example, Si microparticles may be dispersed in graphite particles. For example, Li silicate particles may be coated with a carbon material (e.g., amorphous carbon).

Separator

The separator 20 can separate the positive electrode layer 11 from the negative electrode layer 12. The separator 20 is electrically insulative. The separator 20 may include, for example, at least one selected from the group consisting of a resin film (polymer film), an inorganic particle layer, and an organic particle layer. The separator 20 may include, for example, a resin film and an inorganic particle layer.

The resin film is porous. The resin film may include, for example, a microporous film or a non-woven fabric. The resin film has a resin skeleton. The resin skeleton may be, for example, continuous in a net-like way. Gaps in the resin skeleton form pores. The resin film allows an electrolytic solution to pass through it. The resin film may have an average pore diameter of, for example, 1 $\mu$m or less. The average pore diameter of the resin film may be, for example, 0.01 $\mu$m to 1 $\mu$m or 0.1 $\mu$m to 0.5 $\mu$m. The "average pore diameter" can be measured by mercury intrusion porosimetry. The resin film may have a Gurley value of, for example, 50 s/100 $cm^3$ to 250 s/100 $cm^3$. The Gurley value can be measured by a Gurley test method.

The resin film may contain, for example, at least one selected from the group consisting of an olefin-based resin, a polyurethane-based resin, a polyamide-based resin, a cellulose-based resin, a polyether-based resin, an acrylic resin, and a polyester-based resin. The resin film may contain, for example, at least one selected from the group consisting of polyethylene (PE), polypropylene (PP), polyamide (PA), polyamide imide (PAI), polyimide (PI), aromatic polyamide (aramid), polyphenylene ether (PPE), and derivatives thereof. The resin film can be formed by, for example, stretching or phase separation. The resin film may have a thickness of, for example, 5 $\mu$m to 50 $\mu$m or 10 $\mu$m to 25 $\mu$m.

The resin film may have, for example, a single-layer structure. The resin film may consist of, for example, a PE layer. The skeleton of the PE layer is formed of PE. The PE layer can have a shut-down function. The resin film may have, for example, a multilayer structure. The resin film may include, for example, a PP layer and a PE layer. The skeleton of the PP layer is formed of PP. The resin film may have, for example, a three-layer structure. The resin film may be formed by, for example, laminating a PP layer, a PE layer, and a PP layer in this order. The PE layer may have a thickness of, for example, 5 $\mu$m to 20 $\mu$m. The PP layer may have a thickness of, for example, 3 $\mu$m to 10 $\mu$m.

The inorganic particle layer may be formed on the surface of the resin film. The inorganic particle layer may be formed on only one side of the resin film or may be formed on both sides of the resin film. The inorganic particle layer may be formed on the side facing the positive electrode layer 11 or may be formed on the side facing the negative electrode layer 12. It should be noted that the inorganic particle layer may be formed on the surface of the positive electrode layer 11 or may be formed on the surface of the negative electrode layer 12.

The inorganic particle layer is porous. The inorganic particle layer contains inorganic particles. The inorganic particles may also be referred to as an "inorganic filler". Gaps between the inorganic particles form pores. The inorganic particle layer may have a thickness of, for example, 0.5 $\mu$m to 10 $\mu$m or 1 $\mu$m to 5 $\mu$m. The inorganic particles may contain, for example, a heat-resistant material. The inorganic particle layer containing a heat-resistance material is also referred to as "HRL (Heat Resistance Layer)". The inorganic particles may contain at least one selected from the group consisting of boehmite, alumina, zirconia, titania, magnesia, and silica. The inorganic particles may have any shape. For example, the inorganic particles may be spherical, rod-like, plate-like, or fibrous. The inorganic particles may have a D50 of, for example, 0.1 $\mu$m to 10 $\mu$m or 0.5 $\mu$m to 3 $\mu$m. The inorganic particle layer may further contain a binder. The binder may contain, for example, at least one selected from the group consisting of an acrylic resin, a polyamide-based resin, a fluorine-based resin, an aromatic polyether-based resin, and a liquid crystalline polyester-based resin.

The separator 20 may include, for example, an organic particle layer. The separator 20 may include, for example, an organic particle layer instead of the resin film. The separator 20 may include, for example, an organic particle layer instead of the inorganic particle layer. The separator 20 may include both a resin film and an organic particle layer. The separator 20 may include both an inorganic particle layer and an organic particle layer. The separator 20 may include a resin film, an inorganic particle layer, and an organic particle layer.

The organic particle layer may have a thickness of, for example, 0.1 $\mu$m to 50 $\mu$m, 0.5 $\mu$m to 20 $\mu$m, 0.5 $\mu$m to 10 $\mu$m, or 1 $\mu$m to 5 $\mu$m. The organic particle layer contains organic particles. The organic particles may also be referred to as an "organic filler". The organic particles may contain a heat-resistant material. The organic particles may contain, for example, at least one selected from the group consisting of PE, PP, PTFE, PI, PAI, PA, and aramid. The organic particles may be, for example, spherical, rod-like, plate-like, or fibrous. The organic particles may have a D50 of, for example, 0.1 $\mu$m to 10 $\mu$m or 0.5 $\mu$m to 3 $\mu$m.

The separator 20 may include, for example, a mixed layer. The mixed layer contains both inorganic particles and organic particles.

Electrolytic Solution

The electrolytic solution is a liquid electrolyte. The electrolytic solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. "mol/L" may also be written as "M". The solute contains a supporting salt (Li salt). The solute may contain, for example, an inorganic acid salt, an imide salt, an oxalato complex, or a halide. The solute may contain, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives thereof.

The electrolytic solution may contain, for example, a carbonate-based solvent (carbonic ester-based solvent). The solvent may contain, for example, a cyclic carbonate, a chain carbonate, or a fluorinated carbonate. The solvent may contain, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may contain a cyclic carbonate (e.g., EC, PC, or FEC) and a chain carbonate (e.g., EMC, DMC, or DEC). The mixing ratio (volume ratio) between the cyclic carbonate and the chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may contain a cyclic carbonate (e.g., EC or PC) and a fluorinated cyclic carbonate (e.g., FEC). The mixing ratio (volume ratio) between the cyclic carbonate and the fluorinated cyclic carbonate may be, for example, "cyclic carbonate/fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3" or "cyclic carbonate/fluorinated cyclic carbonate = 3/7 to 1/9".

The solvent may contain, for example, EC, FEC, EMC, DMC, and DEC. The volume ratios of the respective components may satisfy a relationship represented by a relational expression of "$V_{EC} + V_{FEC} + V_{EMC} + V_{DMC} + V_{DEC} = 10$". In the relational expression, "$V_{Ec}$, $V_{FEC}$, $V_{EMC}$, $V_{DMC}$, and $V_{DEC}$" respectively represent the volume ratios of EC, FEC, EMC, DMC, and DEC. The following relationships are satisfied: "$1 \leq V_{EC} \leq 4$", "$0 \leq V_{FEC} \leq 3$", "$V_{EC} + V_{FEC} \leq 4$", "$0 \leq V_{EMC} \leq 9$", "$0 \leq V_{DMC} \leq 9$", "$0 \leq V_{DEC} \leq 9$", and "$6 \leq V_{EMC} + V_{DMC} + V_{DEC} \leq 9$". For example, a relationship of "$1 \leq V_{EC} \leq 2$" or "$2 \leq V_{EC} \leq 3$" may be satisfied. For example, a relationship of "$1 \leq V_{FEC} \leq 2$" or "$2 \leq V_{FEC} \leq 4$" may be satisfied. For example, a relationship of "$3 \leq V_{EMC} \leq 4$" or "$6 \leq V_{EMC} \leq 8$" may be satisfied. For example, a relationship of "$3 \leq V_{DMC} \leq 4$" or "$6 \leq V_{DMC} \leq 8$" may be satisfied. For example, a relationship of "$3 \leq V_{DEC} \leq 4$" or "$6 \leq V_{DEC} \leq 8$" may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4" in terms of volume ratio.

The electrolytic solution may contain an ether-based solvent. The electrolytic solution may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolytic solution may contain any additive. The amount of the additive to be added (the mass fraction of the additive relative to the total mass of the electrolytic solution) may be, for example, 0.01% to 5%, 0.05% to 3%, or 0.1% to 1%. The additive may contain, for example, an SEI (Solid Electrolyte Interphase) formation promoter, an SEI formation inhibitor, a gas-forming agent, an overcharging inhibitor, a flame retardant, an antioxidant, an electrode protective agent, or a surfactant.

The additive may contain, for example, at least one selected from the group consisting of vinylene carbonate (VC), vinyl ethylene carbonate (VEC), 1,3-propanesultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, a phosphazene compound, a carboxylic ester [e.g., methyl formate (MF), methyl acetate (MA), methyl propionate (MP), or diethyl malonate (DEM)], fluorobenzene [e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene], fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphoric ester (e.g., trimethyl phosphate or triethyl phosphate), a carboxylic anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The component described above as a solute or a solvent may be used as a trace component (additive). The additive may contain, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolytic solution may contain an ionic liquid. The ionic liquid may contain, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. That is, the battery may be a polymer battery. The gel electrolyte may contain an electrolytic solution and a polymer material. The polymer material may form a polymer matrix. The polymer material may contain, for example, at least one selected from the group consisting of PVdF, PVdF-HFP, polyacrylonitrile (PAN), PVdF-PAN, polyethylene oxide (PEO), polyethylene glycol (PEG), and derivatives thereof.

ALL-Solid-State Battery

In some present embodiments, the battery may be an all-solid-state battery. The all-solid-state battery may have a bipolar structure. The all-solid-state battery includes a solid electrolyte instead of the electrolytic solution and the separator 20. The solid electrolyte may be contained also in the positive electrode layer 11 and the negative electrode layer 12. Instead of the separator 20, a solid electrolyte layer separates the negative electrode layer 12 from the positive electrode layer 11. The solid electrolyte layer contains, for example, a solid electrolyte and a binder. Also in the electrode (positive electrode layer) of the all-solid-state battery, ion conductivity in the thickness direction is expected to be promoted by the non-spherical particles 1b.

The solid electrolyte may be, for example, a powder. The solid electrolyte may have a D50 of, for example, 0.1 μm or more, 0.2 μm or more, 0.3 μm or more, 0.4 μm or more, 0.5 μm or more, 0.6 μm or more, 0.7 μm or more, 0.8 μm or more, 0.9 μm or more, or 1 μm or more. The solid electrolyte may have a D50 of, for

example, 5 μm or less, 4 μm or less, 3 μm or less, 2 μm or less, or 1 μm or less.

The solid electrolyte may contain, for example, at least one selected from the group consisting of a sulfide solid electrolyte, a halide solid electrolyte, an oxide solid electrolyte, a hydride solid electrolyte, and a nitride solid electrolyte.

The sulfide solid electrolyte may contain at least one selected from the group consisting of an amorphous phase, a crystalline phase, and a glass ceramic (crystallized glass) phase. The crystalline phase may be of, for example, an argyrodite type or an LGPS type. The sulfide solid electrolyte contains Li and sulfur (S). The sulfide solid electrolyte may further contain any component in addition to Li and S.

The sulfide solid electrolyte may contain, for example, at least one selected from the group consisting of LiI-LiBr-Li$_3$PS$_4$, Li$_2$S-SiS$_2$, LiI-Li$_2$S-SiS$_2$, LiI-Li$_2$S-P$_2$S$_5$, LiI-Li$_2$O-Li$_2$S-P$_2$S$_5$, LiI-Li$_2$S-P$_2$O$_5$, LiI-Li$_3$PO$_4$-P$_2$S$_5$, Li$_2$S-GeS$_2$-P$_2$S$_5$, Li$_2$S-P$_2$S$_5$, Li$_{10}$GeP$_2$S$_{12}$, Li$_4$P$_2$S$_6$, Li$_7$P$_3$S$_{11}$, Li$_3$PS$_4$, and LI$_7$PS$_6$.

For example, "LiI-LiBr-Li$_3$PS$_4$" refers to a sulfide solid electrolyte generated by mixing LiI, LiBr, and Li$_3$PS$_4$ in any amount-of-substance ratio. For example, the sulfide solid electrolyte may be generated by a mechanochemical method. A mixing ratio may be specified by placing a numeral in front of each of the raw materials. For example, "10LiI-15LiBr-75Li$_3$PS$_4$" indicates that the mixing ratio is "LiI/LiBr/Li$_3$PS$_4$ = 10/15/75 (amount-of-substance ratio)".

The sulfide solid electrolyte may have a composition represented by, for example, a general formula of "xLi$_2$S-(1-x)P$_2$S$_5$". In the general formula, "x" may be, for example, more than 0, 0.1 or more, 0.2 or more, 0.25 or more, 0.3 or more, 0.4 or more, 0.5 or more, 0.6 or more, 0.7 or more, 0.75 or more, 0.8 or more, or 0.9 or more. "x" may be, for example, 1 or less, 0.9 or less, 0.8 or less, 0.7 or less, 0.75 or less, 0.6 or less, 0.5 or less, 0.4 or less, 0.3 or less, 0.2 or less, or 0.1 or less. For example, when "x = 0.75", "xLi$_2$S-(1-x)P$_2$S$_5$" may have a composition of Li$_3$PS$_4$.

The sulfide solid electrolyte may have a composition represented by, for example, a general formula of "yLiI-zLiBr-(100-y-z)[xLi$_2$S-(1-x)P$_2$S$_5$]". In the general formula, "x" may be, for example, 0.5 or more, 0.6 or more, 0.7 or more, 0.75 or more, 0.8 or more, or 0.9 or more. "x" may be, for example, 1 or less, 0.9 or less, 0.8 or less, 0.75 or less, 0.7 or less, or 0.6 or less. "y" may be, for example, 0 or more, 5 or more, 10 or more, 15 or more, 20 or more, or 25 or more. "y" may be, for example, 30 or less, 25 or less, 20 or less, 15 or less, 10 or less, or 5 or less. "z" may be, for example, 0 or more, 5 or more, 10 or more, 15 or more, 20 or more, or 25 or more. "z" may be, for example, 30 or less, 25 or less, 20 or less, 15 or less, 10 or less, or 5 or less.

The sulfide solid electrolyte may have a composition represented by, for example, a general formula of "Li$_{7-x-2y}$PS$_{6-x-y}$X$_y$". In the general formula, relationships of "0 < 7 - x - 2y", "0 < 6 - x - y", "0 ≤ x", and "0 ≤ y" are satisfied. "X" may contain, for example, at least one selected from the group consisting of fluorine (F), chlorine (Cl), bromine (Br), and iodine (I).

The sulfide solid electrolyte may have a composition represented by, for example, a general formula of "Li$_{4-x}$M$_{1-x}$P$_x$S$_4$". In the general formula, "x" may be, for example, more than 0, 0.1 or more, 0.2 or more, 0.3 or more, 0.4 or more, 0.5 or more, 0.6 or more, 0.7 or more, 0.8 or more, or 0.9 or more. "x" may be, for example, less than 1, 0.9 or less, 0.8 or less, 0.7 or less, 0.6 or less, 0.5 or less, 0.4 or less, 0.3 or less, 0.2 or less, or 0.1 or less. "M" may contain, for example, at least one selected from the group consisting of Al, Zn, In, Ge, Si, Sn, Sb, Ga, and Bi.

The sulfide solid electrolyte may have a composition represented by, for example, a general formula of "Li$_{10+x}$Ge$_{1+x}$P$_{2-x}$S$_{12}$". In the general formula "x" may be, for example, 0 or more, 0.1 or more, 0.2 or more, 0.3 or more, 0.4 or more, 0.5 or more, or 0.6 or more. "x" may be, for example, 0.7 or less, 0.6 or less, 0.5 or less, 0.4 or less, 0.3 or less, 0.2 or less, or 0.1 or less. The sulfide solid electrolyte represented by the above general formula may contain, for example, an LGPS-type crystalline phase.

The halide solid electrolyte may have a composition represented by, for example, a general formula of "Li$_{6-na}$M$_a$X$_6$". In the general formula, "n" represents the oxidation number of "M". "M" may contain, for example, an atom having an oxidation number of +3. "M" may contain, for example, an atom having an oxidation number of +4. "M" may contain, for example, at least one selected from the group consisting of Y, Al, Ti, Zr, Ca, and Mg. For example, a relationship of "0 < a < 2" may be satisfied. "X" may contain, for example, at least one selected from the group consisting of F, Cl, Br, and I.

The halide solid electrolyte may have a composition represented by, for example, a general formula of "Li$_{3-a}$Ti$_a$Al$_{1-a}$F$_6$". In the general formula, "a" may be, for example, 0 or more, 0.1 or more, 0.2 or more, 0.3 or more, 0.4 or more, 0.5 or more, 0.6 or more, 0.7 or more, 0.8 or more, or 0.9 or more. "a" may be, for example, 1 or less, 0.9 or less, 0.8 or less, 0.7 or less, 0.6 or less, 0.5 or less, 0.4 or less, 0.3 or less, 0.2 or less, or 0.1 or less.

The halide solid electrolyte may have a composition represented by, for example, a general formula of "Li$_3$YCl$_a$Br$_b$I$_{6-a-b}$". In the general formula, a relationship of, for example, "0 ≤ a + b ≤ 6" may be satisfied. "a" may be, for example, 0 or more, 1 or more, 2 or more, 3 or more, 4 or more, or 5 or more. "a" may be, for example, 6 or less, 5 or less, 4 or less, 3 or less, 2 or less, or 1 or less. "b" may be, for example, 0 or more, 1 or more, 2 or more, 3 or more, 4 or more, or 5 or more. "b" may be, for example, 6 or less, 5 or less, 4 or less, 3 or less, 2 or less, or 1 or less.

The oxide solid electrolyte may contain at least one selected from the group consisting of LiNbO$_3$, Li$_{1.5}$Al$_{0.5}$Ge$_{1.5}$(PO$_4$)$_3$, La$_{2/3-x}$Li$_{3x}$TiO$_3$, and Li$_7$La$_3$Zr$_2$O$_{12}$.

The hydride solid electrolyte may contain, for example, $LiBH_4$. The nitride solid electrolyte may contain, for example, $Li_3N$ or $Li_3BN_2$.

Example

Preparation of Samples

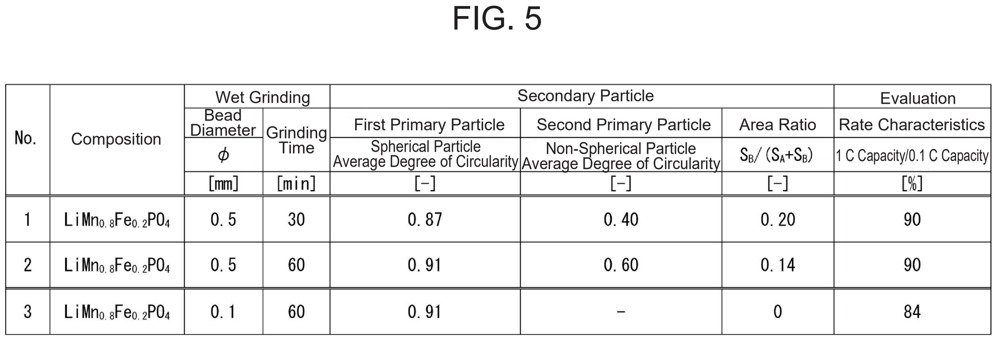

FIG. 5 is a table showing experimental results. According to the following procedure, No. 1 to No. 3 positive electrode active materials were produced.

No. 1

Preparation of Glass Precursor

Lithium carbonate, manganese carbonate, iron oxalate, and phosphoric acid are weighed as raw materials in such a manner that a compositional ratio shown in a composition formula of "$Li_1Mn_{0.8}Fe_{0.2}PO_4$" is achieved. The powder materials other than phosphoric acid are mixed to form a powder mixture. The powder mixture is subjected to grinding and mixing in a mortar until a reaction is terminated while phosphoric acid is added to the powder mixture such that a powder of a first precursor is formed. At this time, generation of gas can be prevented by gradually adding phosphoric acid. The powder of the first precursor is placed in a graphite crucible. The graphite crucible is placed in a firing furnace. In an inert atmosphere, firing is performed by the following procedure. First, the temperature in the furnace is increased to 1100°C at a temperature increase rate of 5°C/min. The temperature in the furnace is maintained at 1100°C for 1 hour. After the temperature in the furnace is maintained for 1hour, cooling is performed until the temperature in the furnace is decreased to 600°C at a temperature decrease rate of 5°C/min. Then, cooling is performed until the temperature in the furnace is decreased to room temperature at a temperature decrease rate of 15°C/min. In this way, a glassy active material block is obtained. The active material block is ground by a mechanical grinding device to form a second precursor.

Wet Grinding

Fructose is added to the second precursor at a mass fraction of 10% to form a third precursor. The third precursor is ground in a water solvent by a bead mill to form a fourth precursor. During the grinding, beads (grinding medium) having a diameter ($\phi$) of 0.3 mm are used. A circumferential speed is 10 m/s. A grinding time is 30 min.

Firing

The fourth precursor is dried. After drying, the fourth precursor is placed in a graphite crucible. The graphite crucible is placed in a firing furnace. The temperature in the furnace is increased to 650°C at a temperature increase rate of 5°C/min. The temperature in the furnace is maintained at 650°C for 1 hour. Then, cooling is performed until the temperature in the furnace is decreased to room temperature. In this way, a positive electrode active material (LMFP) is produced. The SEM cross-section image of the positive electrode active material is obtained. The degrees of circularity of primary particles are evaluated using the SEM cross-section image.

No. 2

A positive electrode active material is produced in the same manner as No. 1 except that the grinding time of wet grinding is changed to 60 min.

No. 3

A positive electrode active material is produced in the same manner as No. 2 except that beads having a diameter ($\phi$) of 0.1 mm are used in wet grinding.

Evaluation

Production of Coin Cell

A positive electrode active material, an electrically-conductive material (acetylene black), and a binder (PVdF) are mixed to form a mixture. The mixing ratio (mass ratio) among them is "positive electrode active material/electrically-conductive material/binder = 92/5/3". The mixture is dispersed in a solvent (N-methyl-2-pyrrolidone) to form a paste. The solid content concentration of the paste is 50% in terms of mass fraction. The paste is applied onto the surface of an Al foil and dried to form a positive electrode layer. The density of the positive electrode layer is adjusted to 1.8 g/cm³ by roll press to form a positive electrode original plate. The positive electrode original plate is subjected to vacuum drying treatment at 120°C for 12 hours. After drying, a disc sample (diameter: 14 mm) is punched out from the positive electrode original plate.

A coin cell is assembled in a glove box. The configuration of the cell is as follows.

> Working electrode: Disk sample (Positive electrode)
> Counter electrode: Li foil
> Separator: Polymer porous membrane
> Electrolytic solution: "EC/DMC = 3/7 (Volume ratio)", $LiPF_6$ (1 mol/L)

Evaluation of Rate Characteristics

A rate corresponding to 1C is determined based on a discharge capacity (theoretical capacity) determined from the mass of the positive electrode layer applied. "C" is a symbol indicating the rate (hour rate) of an electric current. At a rate of 1C, a theoretical capacity is discharged in 1 hour. At 25°C, a coin cell is charged by constant current-constant voltage (CCCV) charging under the following conditions.

Rate during CC charging: 0.1 C
Upper limit charging voltage: 4.3 V
Rate of cut current during CV charging: 0.01 C

After charging, CC discharging to 3.0 V is performed at a rate of 0.1 C at 25°C to measure a discharge capacity "A" during discharging at 0.1 C. The coin cell is again charged by the above CCCV charging. After charging, CC discharging to 3.0 V is performed at 25°C at a rate of 1 C to measure a discharge capacity "B" during discharging at 1 C. A ratio of "1 C capacity/0.1 C capacity" is determined by a calculation formula of "B/A". It is considered that the larger the ratio "1 C capacity/0.1 C capacity", the better rate characteristics.

Experimental Results

As shown in FIG. 5, the rate characteristics tend to improve when the positive electrode active material includes a non-spherical particle (primary particle) having a degree of circularity of 0.60 or less.
Also the rate characteristics tend to improve when a secondary particle including a spherical particle and a non-spherical particle is formed.
The secondary particles in the samples having excellent rate characteristics tend to satisfy a relationship of "$0.05 < S_B/(S_A + S_B) < 0.30$".

**Claims**

1. A positive electrode active material comprising a primary particle containing an olivine-type phosphate compound and having a degree of circularity of 0.60 or less.

2. The positive electrode active material according to claim 1, further comprising a secondary particle (2), wherein:

   the secondary particle (2) includes a first primary particle (1a) and a second primary particle (1b);
   each of the first primary particle (1a) and the second primary particle (1b) contains the olivine-type phosphate compound;
   the first primary particle (1a) has a degree of circularity of 0.80 or more; and
   the second primary particle (1b) has a degree of circularity of 0.60 or less.

3. The positive electrode active material according to claim 2, wherein

   the secondary particle (2) satisfies a relationship of $0.05 < S_B/(S_A + S_B) < 0.30$,
   $S_A$ represents a total area of the first primary particles (1a) in a cross-section of the secondary particle (2), and
   $S_B$ represents a total area of the second primary particles (1b) in the cross-section of the secondary particle (2).

4. The positive electrode active material according to claim 3, wherein

   the first primary particles (1a) have an average degree of circularity of 0.87 to 0.91,
   the second primary particles (1b) have an average degree of circularity of 0.40 to 0.60, and
   the secondary particle (2) satisfies a relationship of $0.14 \leq S_B/(S_A + S_B) \leq 0.20$.

5. The positive electrode active material according to any one of claims 1 to 4, wherein the olivine-type phosphate compound contains at least one selected from the group consisting of lithium iron phosphate, lithium manganese phosphate, and lithium manganese iron phosphate.

6. An electrode (10) comprising a positive electrode layer, wherein
   the positive electrode layer (11) contains the positive electrode active material according to any one of claims 1 to 4.

7. A battery (100) comprising the electrode (10) according to claim 6.

8. The battery (100) according to claim 7, wherein the battery has a bipolar structure.

# FIG. 1

# FIG. 2

# FIG. 3

# FIG. 4

# FIG. 5

| No. | Composition | Wet Grinding | | Secondary Particle | | | Evaluation |
| --- | --- | Bead Diameter $\phi$ | Grinding Time | First Primary Particle | Second Primary Particle | Area Ratio | Rate Characteristics |
| | | | | Spherical Particle Average Degree of Circularity | Non-Spherical Particle Average Degree of Circularity | $S_B/(S_A+S_B)$ | 1 C Capacity/0.1 C Capacity |
| | | [mm] | [min] | [−] | [−] | [−] | [%] |
| 1 | $LiMn_{0.8}Fe_{0.2}PO_4$ | 0.5 | 30 | 0.87 | 0.40 | 0.20 | 90 |
| 2 | $LiMn_{0.8}Fe_{0.2}PO_4$ | 0.5 | 60 | 0.91 | 0.60 | 0.14 | 90 |
| 3 | $LiMn_{0.8}Fe_{0.2}PO_4$ | 0.1 | 60 | 0.91 | − | 0 | 84 |

Europäisches
Patentamt

European
Patent Office

Office européen
des brevets

# EUROPEAN SEARCH REPORT

Application Number

EP 25 21 7642

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/002200 A1 (BYD CO LTD [CN]) 4 January 2024 (2024-01-04) * claims 1-6; figs. 1-6; [0081]ff: examples 1-6 * | 1-8 | INV. H01M4/58 ADD. H01M4/36 |
| X | CN 118 299 561 A (BYD CO LTD; CHUZHOU FUDI BATTERY CO LTD) 5 July 2024 (2024-07-05) * claims 1, 2; p. 10: example 10; tab. 1 * | 1,3-8 | |
| T | LIU JIAN ET AL: "Re-considering the LiMnFePO/C cathodes utilized in electric vehicles", IONICS KIEL, DE, vol. 26, no. 7, 28 January 2020 (2020-01-28), pages 3215-3221, XP037161659, ISSN: 0947-7047, DOI: 10.1007/S11581-020-03441-8 [retrieved on 2020-01-28] * abstract * | | |

TECHNICAL FIELDS
SEARCHED (IPC)

H01M

The present search report has been drawn up for all claims

| Place of search | Date of completion of the search | Examiner |
|---|---|---|
| Munich | 18 March 2026 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 7642

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | Publication date | Patent family member(s) | Publication date |
|---|---|---|---|
| WO 2024002200 A1 | 04-01-2024 | CN 114883521 A | 09-08-2022 |
| | | EP 4550439 A1 | 07-05-2025 |
| | | JP 2025519837 A | 26-06-2025 |
| | | KR 20240164918 A | 21-11-2024 |
| | | US 2025105241 A1 | 27-03-2025 |
| | | WO 2024002200 A1 | 04-01-2024 |
| CN 118299561 A | 05-07-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021009838 A